(19) Europäisches Patentamt
European Patent Office
Office européen des brevets

(11) **EP 1 673 732 B1**

(12) **EUROPEAN PATENT SPECIFICATION**

(45) Date of publication and mention
of the grant of the patent:
**13.05.2009 Bulletin 2009/20**

(51) Int Cl.:
***G06T 17/00*** (2006.01)

(21) Application number: **04768782.7**

(86) International application number:
**PCT/GB2004/004248**

(22) Date of filing: **07.10.2004**

(87) International publication number:
**WO 2005/036428 (21.04.2005 Gazette 2005/16)**

(54) **DESIGN BY SPACE TRANSFORMATION FROM HIGH TO LOW DIMENSIONS**

ENTWURF DURCH RAUMTRANSFORMATION VON HOHEN IN NIEDRIGE DIMENSIONEN

CONCEPTION PAR TRANSFORMATION DE L'ESPACE DE HAUTE A DE BASSES DIMENSIONS

(84) Designated Contracting States:
**AT BE BG CH CY CZ DE DK EE ES FI FR GB GR HU IE IT LI LU MC NL PL PT RO SE SI SK TR**

(30) Priority: **10.10.2003 GB 0323848**
**10.10.2003 EP 03256422**
**16.04.2004 GB 0408529**

(43) Date of publication of application:
**28.06.2006 Bulletin 2006/26**

(73) Proprietor: **BAE Systems PLC**
**London SW1Y 5AD (GB)**

(72) Inventors:
• **HOLDEN, Carren M.E.,**
**BAE Systems (Operations) Ltd.**
**Leicestershire LE11 3TU (GB)**
• **KEANE, Andrew John,**
**University of Southampton**
**Southampton,**
**Hampshire SO17 1BJ (GB)**

(74) Representative: **BAE SYSTEMS plc**
**Group IP Department**
**Warwick House**
**PO Box 87**
**Farnborough Aerospace Centre**
**Farnborough,**
**Hampshire GU14 6YU (GB)**

(56) References cited:
• **EL-BELTAGY M A ET AL: "Topographical mapping assisted evolutionary search for multilevel optimization" PROCEEDINGS OF THE 1999 CONGRESS ON EVOLUTIONARY COMPUTATION-CEC99 (CAT. NO. 99TH8406), PROCEEDINGS OF THE 1999. CONGRESS ON EVOLUTIONARY COMPUTATION-CEC99, WASHINGTON, DC, USA, 6-9 JULY 1999, 6 July 1999 (1999-07-06), pages 660-665 Vol. 1, XP002270681 1999, Piscataway, NJ, USA, IEEE, USA ISBN: 0-7803-5536-9**
• **C. M. E. HOLDEN, R. DAVIES, AND A. J. KEANE: "Optimization Methodologies in Conceptual Design" PROC. 9TH AIAA/ISSMO SYMP. ON MULTIDISCIPLINARY ANALYSIS AND OPTIMIZATION, 2002, pages 1142-1152, XP009026008 Atlanta**
• **TINO P ET AL: "Hierarchical GTM: constructing localized nonlinear projection manifolds in a principled way" IEEE TRANSACTIONS ON PATTERN ANALYSIS AND MACHINE INTELLIGENCE, MAY 2002, IEEE COMPUT. SOC, USA, vol. 24, no. 5, May 2002 (2002-05), pages 639-656, XP001141214 ISSN: 0162-8828**

**Description**

Field of the Invention

This invention concerns design by space transformation from high to low dimensions. More particularly but not exclusively, this invention concerns methods and systems for design by transforming data from a high to low dimensional design space.

Background of the Invention

There are considerable cost benefits to be derived from improving designs both by better searches in current design spaces and by satisfying more complex design criteria, for instance by striking the right balance between multiple objectives from the same discipline or from different disciplines.

In known design processes designers typically spend a prohibitively long time preparing individual analysis cases and, are constrained to sampling small areas of the design space close to previously explored regions. In such a design processes, complex design tasks are broken down into manageable portions so that specialists in individual disciplines can resolve different parts of the design. However, such portions are too small and there is too much iteration between disciplines which prohibits the challenging of the constraints of one discipline by another, where the most progress is likely to be made. Furthermore, known design space exploration techniques as applied to complex multi-dimensional design spaces are invariably inefficient on account of the associated high computational processing cost required for the data analysis. Also, such techniques can be problematic to use in complex multi-dimensional design spaces because these typically rely on simplistic data analysis models involving different parameters - for example, numerical errors or uncertainties associated with discretisation, incomplete convergence, irregular constraint boundaries can arise. The inventors have recognised that this situation can be ameliorated if small numbers of individuals can assimilate, appreciate and understand large amounts of data rapidly and efficiently. With this in mind, this inventive work is aimed directly at the designers in the design process of the future, who communicate with and steer the design search and optimisation process and who use software and data as web services, so that the source of this data and software becomes unknown and unimportant. Such designers make use of high cost analysis codes within automated search and response surface models to map and optimise domains using computationally expensive evaluations. They can use low fidelity (or computationally inexpensive) models to navigate high fidelity design spaces. The placement of analyses in the design space are defined by design of experiments (DoE) methods both as schemes defined a *priori* and as a result of optimisation or error-defining processes. These engineers, armed with more information and understanding, can be expected to regularly challenge cross-discipline constraints. They are more concerned with problem definition, design space shape and optimisation than how any one analysis is obtained and use advanced visualisation techniques to provide enhanced comprehension and effective navigation of hyper-dimensional design spaces.

Document D1 (EL-BELTAGY M A ET AL: "Topographical mapping assisted evolutionary search for multilevel optimisation", Proceedings of the 1999 Congress on Evolutionary Computation - CEC99 CAT. No. 99th 8406, Washington DC USA, 6 July 1999 pp 660-665 Vol. 1) describes the use of Generative topographical mapping (GTM) for multilevel optimisation.

Document D2 (C.M.E. Holden, R. Davies, and A. J. Keane: "Optimisation Methodologies in Conceptual Design", Proc. 9th AIAA/ISSMO Symp. On Multidisciplinary analysis and optimisation, 2002, pp1142-1152, Atlanta, Chapter 3: "The Conceptual Design Problem") describes optimisation methodologies in conceptual design.

Objects and Summary of the Invention

The present invention aims to overcome or at least substantially reduce some of the above mentioned drawbacks associated with known processes.

It is an object of the present invention to provide a method and system which are reliable for providing enhanced comprehension and effective navigation of multi-dimensional design spaces.

In broad terms, the present invention resides in the concept of transforming data from a high-dimensional to low-dimensional design space and, by inspecting the transformed data in the low-dimensional design space, enabling an optimum value for a functional representation of the transformed data to be established, and thereby permitting effective exploration of the high-dimensional design space.

According to a first aspect of the present invention there is provided a method of transforming data from a high-dimensional to low-dimensional design space for application to an aerodynamic surface design by using a data processing system and deriving an optimum value for a predetermined function representative of the transformed data in the low-dimensional design space, which derivation is further effected in the low-dimensional design space in dependence upon an inspection of the transformed data and wherein the value derivation is effected by generating an image map representation of the transformed data in the low-dimensional design space, and visually identifying an intersecting region in the image map representation, which intersecting region provides an indication of said value.

According to a second aspect of the present invention there is provided a method of transforming data from a high-dimensional to low-dimensional design space for application to an aerodynamic surface design by using a data processing system and deriving a conditional value for a predetermined function representative of the transformed data in the low-dimensional design space, which derivation is further effected in the low-dimensional design space in dependence upon an inspection of the transformed data and wherein the value derivation is effected by generating an image map representation of the transformed data in the low-dimensional design space, and visually identifying an intersecting region in the image map representation, which intersecting region provides an indication of said value.

It is to be understood here that the terms "optimum value" and "conditional value" herein are interchangeably used insofar as they are intended to correspond to the highest or lowest value of the functional representation of the transformed data in the low-dimensional design space, the particular various constraints to the design space problem being further satisfied at the same time.

In accordance with an exemplary embodiment of the invention which will be described hereafter in detail, the optimum/conditional value is derived by (a) establishing a mathematical combination of a number of independent design variables and dependent design variables relating to the function, and (b) modifying the combination in the low-dimensional design space to derive therefrom the desired value for the function at which various constraints associated with the function are satisfied and at which the function has a conditional high or low value in relation to other possible values of the function which are determined in accordance with the modification of said combination

Conveniently, the transformation into the low-dimensional design space is performed by application of a Generative Topographic Map (GTM) technique. It is to be appreciated that alternative transformation techniques, the self-organizing map (SOM) after Kohonen [13], or the Neuroscale mapping (this is a physical distance preserving mapping technique), for example, could be used instead for this particular application.

In accordance with another embodiment of the invention which will be described hereinafter in detail, the method comprises the step of transforming data from a first high-dimensional design space and from a second, different high-dimensional design space into a low-dimensional design space, comparing the different transformed data sets in said low-dimensional design space and identifying therefrom similarities between the different transformed data sets to indicate a correspondence between the first and second high-dimensional design spaces. This provides an effective way of assessing the importance and inter relationship of design variables in different high-dimensional design space problems. In this embodiment, to be described hereafter, the first high-dimensional design space is a 5-dimensional design space, the second high-dimensional design space is an 8-dimensional design space, the third high-dimensional design space is a 14-dimensional design space, and the low-dimensional design is a two-dimensional design space. It is to be appreciated, however, that various other kinds of high-dimensionality design space can be readily accommodated, if desired.

Advantageously, the data transformation into the low-dimensional design space is performed in a manner which takes account of the effect of each of the design variables relating to the function. This makes optional the need for any pre-screening of the design variables.

Thus, the optimum/conditional value derivation is effected by generating an image map representation of the transformed data in the low-dimensional design space (for example, a 2-D image map representation may be generated), and visually identifying an intersecting region in the image map representation, which intersecting region provides an indication of said value. It is to be understood that the identification step could be performed computationally, if desired, so as to provide the required technical effect.

The invention has utility for aircraft design applications and although this technology has been developed with reference to aircraft aerodynamic design in particular, the design space visualization and curve fitting technology developed is general. It should therefore be equally applicable to other disciplines such as cost analysis, structures and computational electromagnetics, in which expensive analysis tools are used to find optima for complicated design problems. It is expected to be particularly useful in multi-disciplinary design and situations where there are multiple optima in the design space.

It is to be appreciated that the present invention may be embodied in software. Accordingly, the present invention extends to a computer program element comprising program code for configuring a programmable device apparatus or system to implement the above described method. Suitably, the computer program is stored on a carrier medium.

Further, the present invention extends to a data processing system or apparatus for transforming data from a high-dimensional to low-dimensional design space adapted and arranged to implement the above described method.

The above and further features of the invention are set forth with particularity in the appended claims and will be described hereinafter with reference to the accompanying drawings.

Brief Description of the Drawings

Figure 1 shows a schematic representation of an RSM-Based Design Process;

Figure 2 shows an image representative of a design space for an analytical function;

Figure 3 shows a series of conventional scatter plots;

Figure 4 shows a set of self-organising maps for a 2-D analytical problem;

Figure 5 shows an alternative image representation of the image of Figure 2;

Figure 6 shows the typical result of transforming the image representation of Figure 5 into a triangle;

Figure 7 shows the typical result of transforming the image representation of Figure 5 into an SOM;

Figure 8 shows the typical result of transforming the image representation of Figure 5 into a GTM;

Figure 9 shows the typical result of a 50 x 50 evaluation of a 2-D design space using a 2-D panel method;

Figure 10 shows a series of scatter plots for a 5-D military aircraft problem;

Figure 11 shows a set of self-organising maps for a 5-D military aircraft problem;

Figure 12 shows a 5-dimensional Hierarchical Axes Technique plot;

Table 1 shows a typical set of results for design space optimisation as obtained form the Kriging Process;

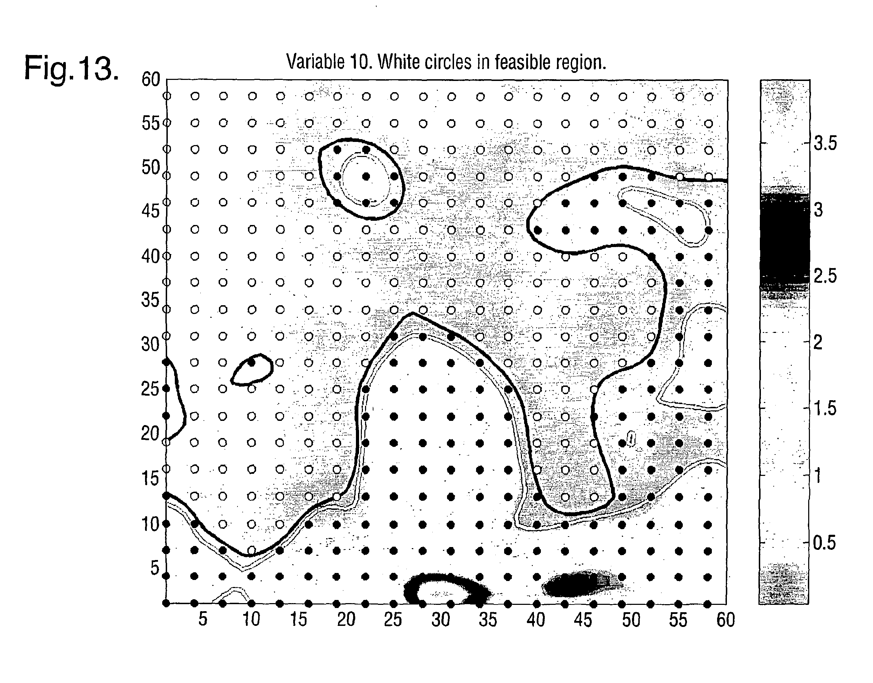

Table 2 shows a set of results corresponding to Figure 13 for design space optimisation, as obtained from GTM optimisation for a 5-D problem;

Figure 13 shows an image map representation of transformed data in 2-D design space, in accordance with an embodiment of the invention;

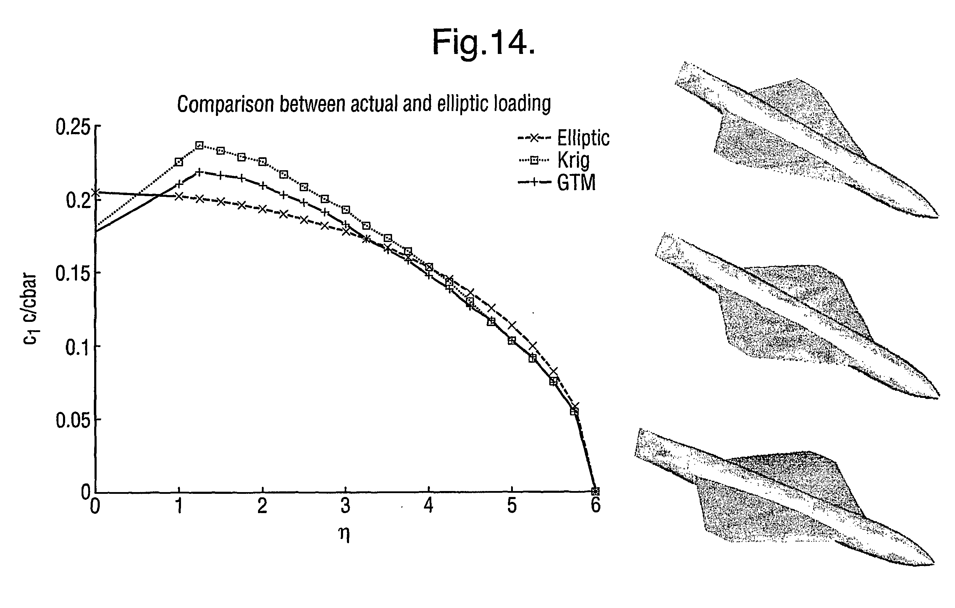

Figure 14 shows a loading distribution plot of optimised wing design corresponding to an inventive application of an embodiment of the present invention;

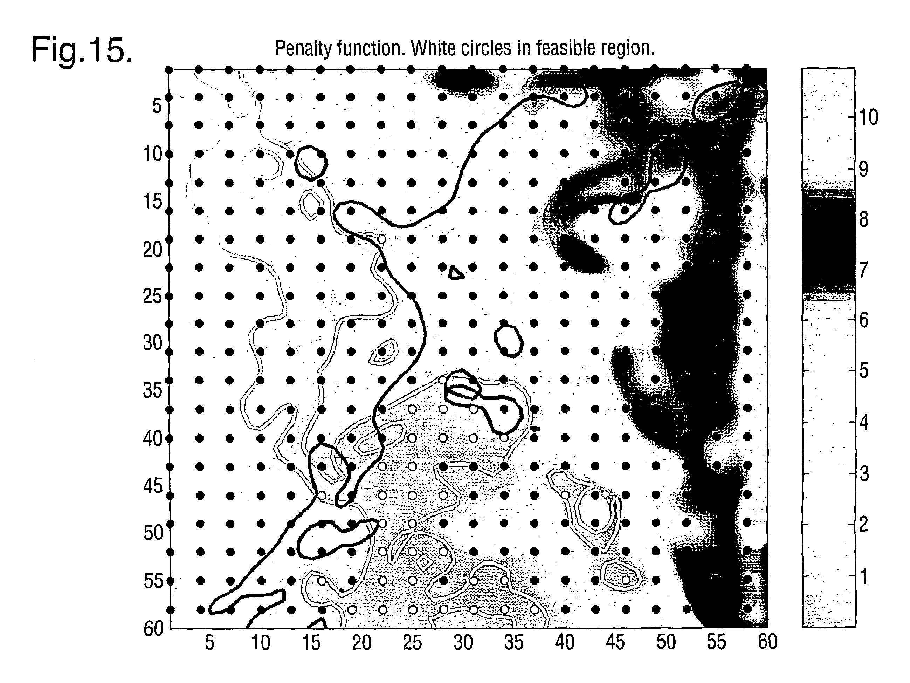

Figure 15 shows an image map representation of transformed data in 2-D design space, as obtained from GTM transformation of an 8-D aerodynamic problem;

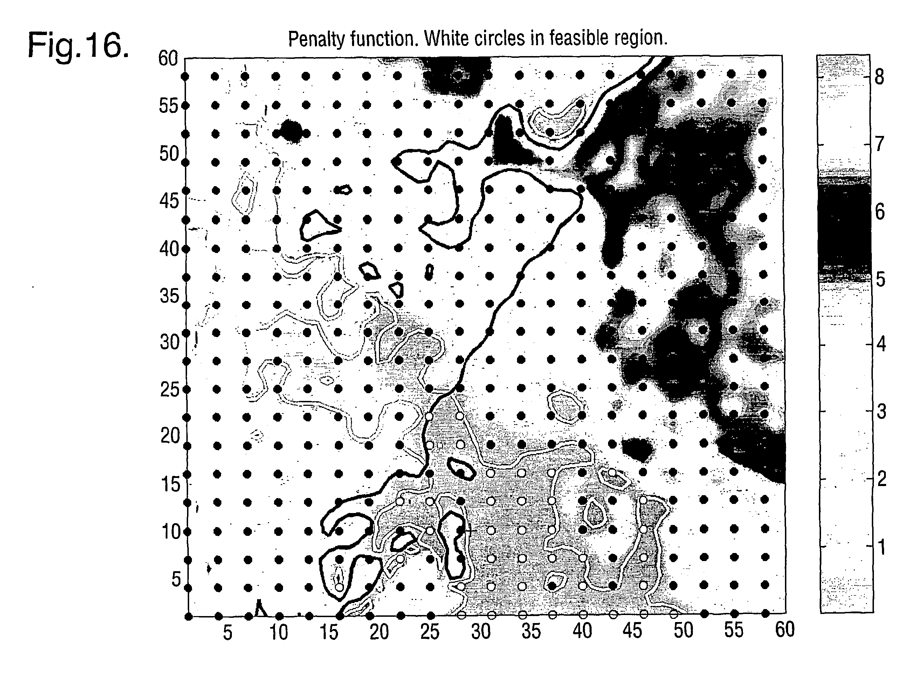

Figure 16 shows another image map representation of transformed data in 2-D design space, as obtained from GTM transformation of a 14D aerodynamic problem;

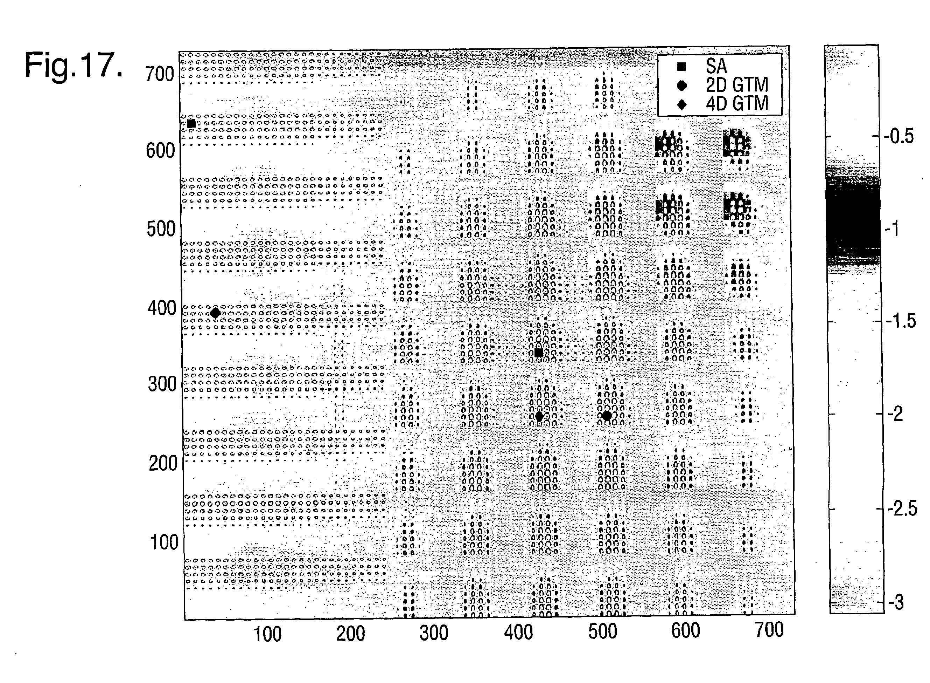

Figure 17 shows a Hierarchical Axes Technique (HAT) plot of the 6D Hartmann function;

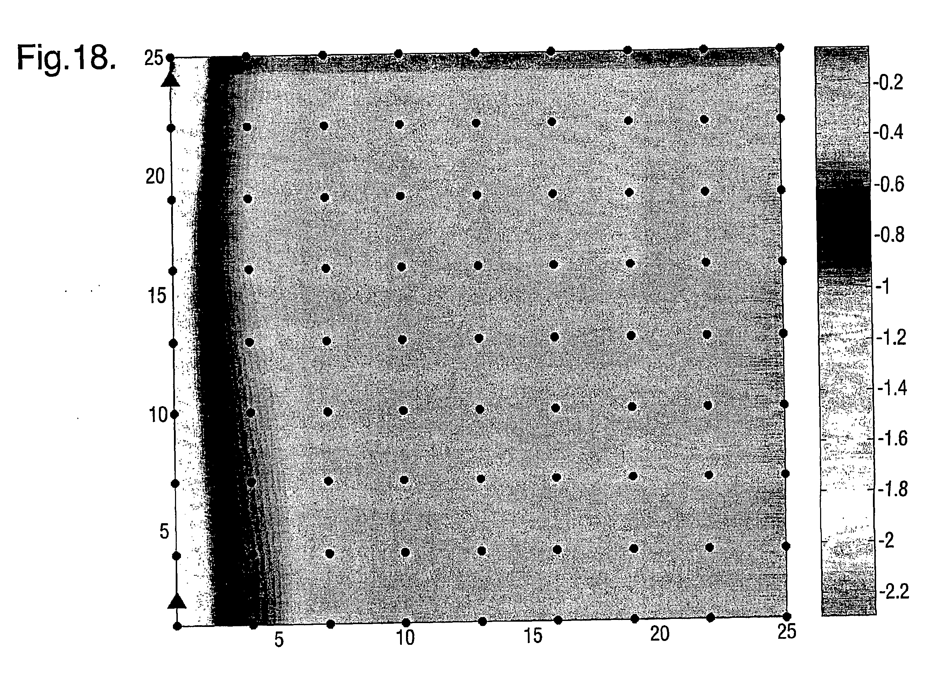

Figure 18 shows another image map representation of transformed data, as obtained from a 2D GTM transformation of the 6D Hartmann function;

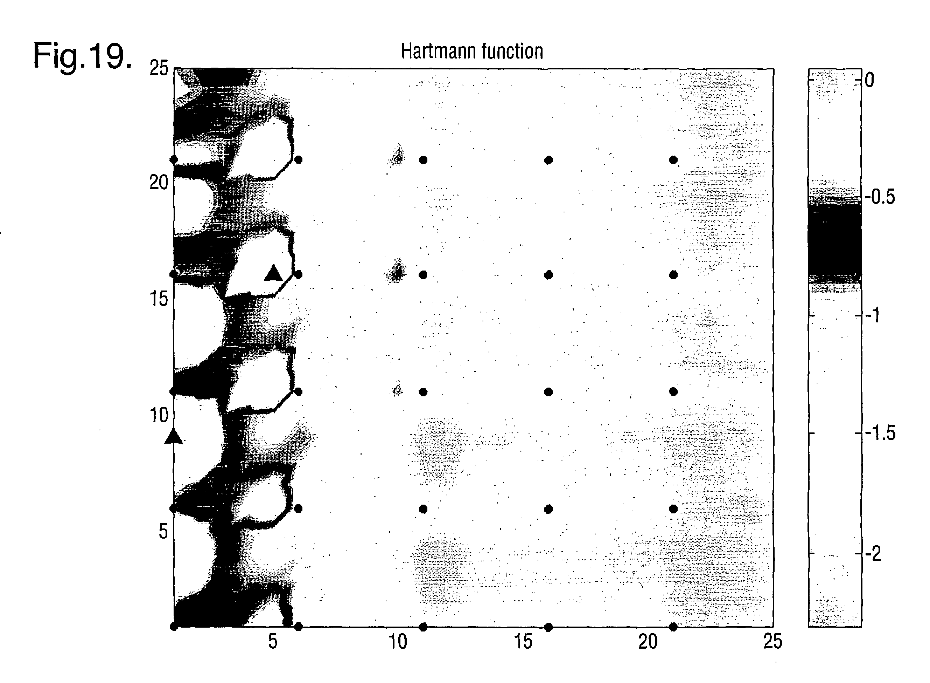

Figure 19 shows another image map representation of transformed data, as obtained from a 4D GTM transformation of the 6D Hartmann function;

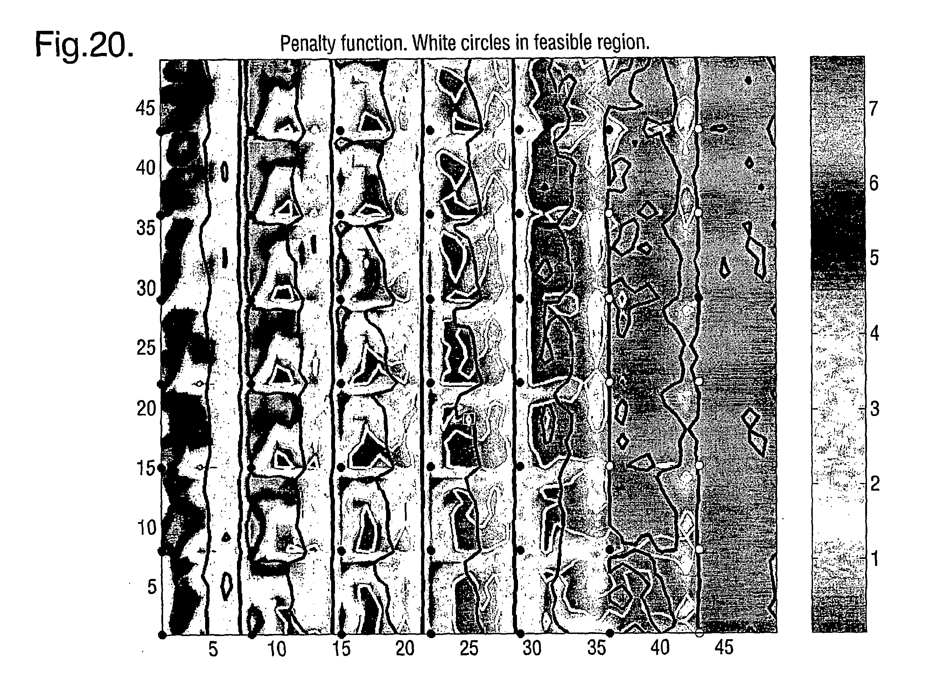

Figure 20 shows another image map representation of transformed data, as obtained from 4D GTM transformation of the 14D aircraft problem; and

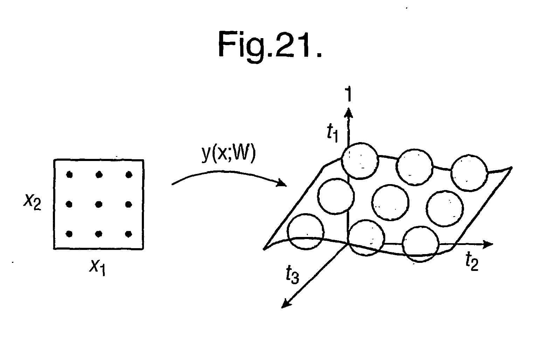

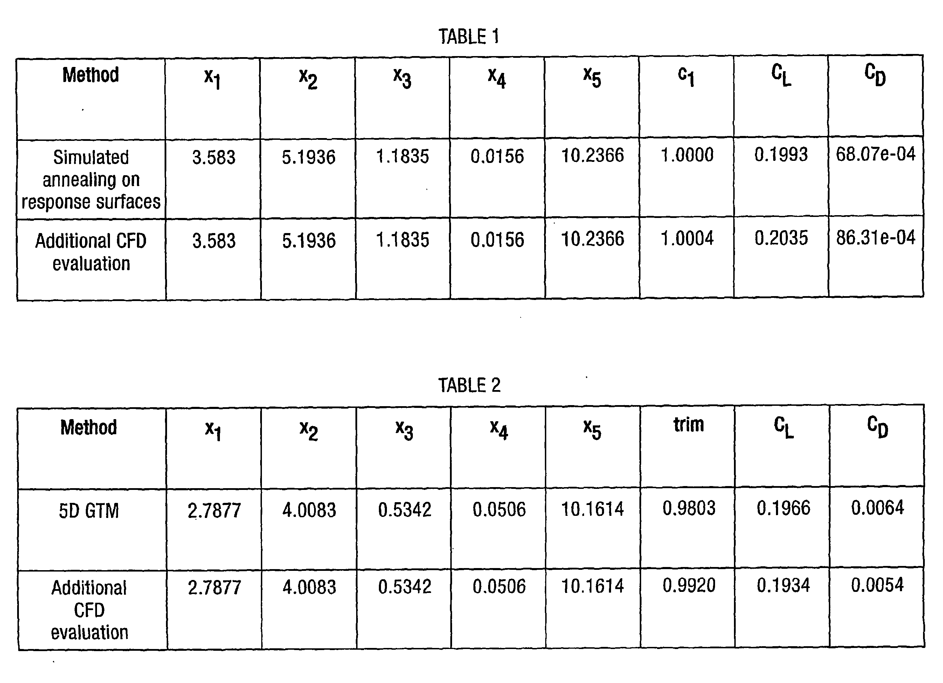

Figure 21 shows how points on a regular grid in low-dimensional space are mapped using a non-linear mapping to corresponding centres of Gaussians.

Detailed Description of Exemplary Embodiments

This invention is to be described in the following way. The application of visualisation and design space transformation on a two-dimensional analytical problem is described and then extended for use in military aircraft design. A two dimensional visualisation of a representative military aircraft problem is described and then extended to 5, 8 and 14 dimensions. The description includes a specification of the optimisation problems and a *modus operandi* for a design process is introduced. The visualisation is compared to alternative techniques, such as scatter plots and SOM visualisations. Possible applications of the different visualisation methods, in conjunction with response surface method technology, are also described. The proposed inventive process whereby the transformed design space is then used to obtain the optimum in the design space is explained. The proposed process and usual process are compared for the 5-D problem. It is shown how by implementing the proposed process the solving and understanding of multi-dimensional design spaces can be effectively performed in a two-dimensional image.

Modus Operandi

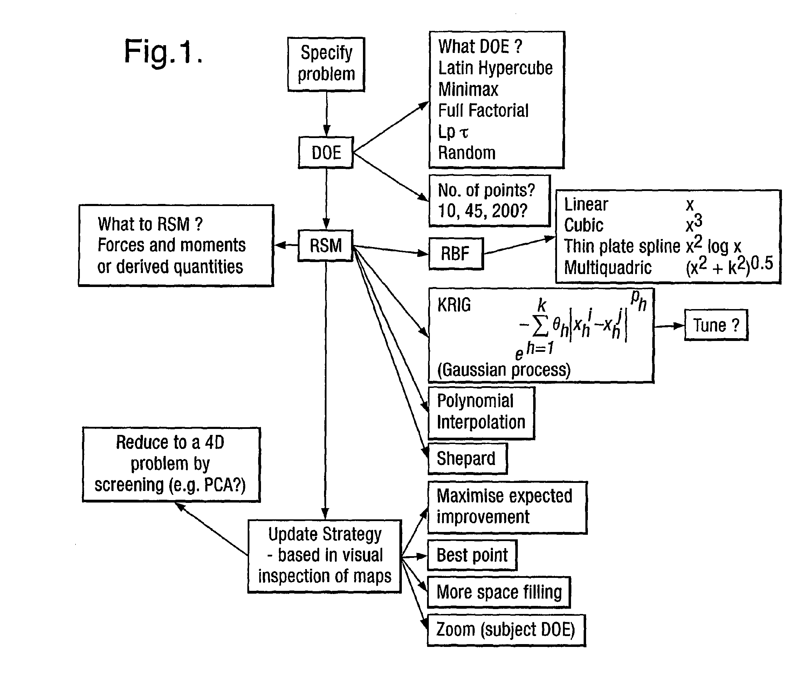

It is to be appreciated that the large amounts of data required for design space appreciation can be provided by response surface method technology. Visualisation is part of a *modus operandi,* as shown in Figure 1. This comprises first, a problem specification, in terms of objectives, constraints and design variables. Then a DoE (*e.g.* Latin Hypercube [3], $LP_\tau$ [4]) is performed and a response surface methodology applied (for instance kriging, radial basis functions [5,6,7], etc.). An update strategy is then determined by statistical methods, such as expected improvement or the optimum in the domain based on the visual inspection of maps. As part of this process an assessment takes place as to the importance of the design variables in the problem. The inventors have found that the first visualisation method proposed ceases to work after about 6 dimensions. The inventors propose to transform the spaces described from high dimensions (5, 8 or 14-D in this case) to just two or four dimensions by use of the generative topographic map (GTM) (although the exact dimensionality of the low dimensional transform is optional).

As previously mentioned, the invention is described hereinafter by use of two example problems. First, a simple two-dimensional analytical problem, from Schwefel's book [1] as described. Secondly, a military aircraft optimisation in 2, 5, 8 and 14 dimensions is described. More conventional design space appreciation and response surface fitting methodology is also described.

Analytical Problem Specification

A two-dimensional analytical function is chosen so that full appreciation of the design space and comparison with the transformations is possible. It is assumed that if transformations are poor in two-dimensions then their application in higher dimensions will be even worse.

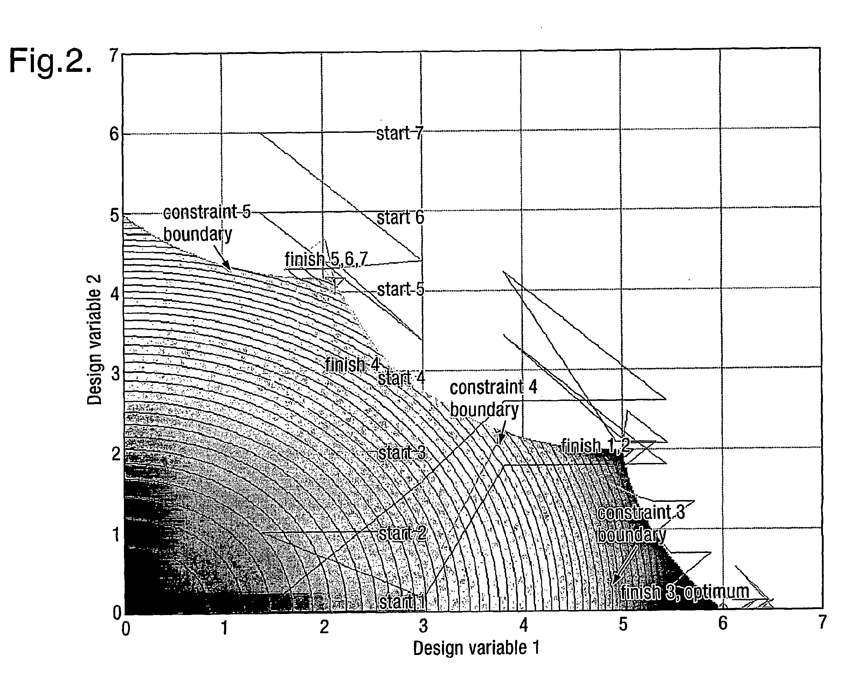

The analytical problem is shown in Figure 2 where the objective function *(Ob)* and the constraints *(C₁ to C₇)* are defined as:

$$Ob(x) = -x_1^2 - x_2^2$$

$$C_1'(x) = -x_1$$

$$C_2(x) = -x_2$$

$$C_3(x) = -x_1^2 - x_2^2 + 17.0x_1 + 5.0x_2 - 66.0$$

$$C_4(x) = -x_1^2 - x_2^2 + 10.0x_1 + 10.0x_2 - 41.0$$

$$C_5(x) = -x_1^2 - x_2^2 + 4.0x_1 + 14.0x_2 - 45.0$$

$$C_6(x) = x_1 - 7.0$$

$$C_7(x) = x_2 - 7.0$$

In this definition, a constraint is considered satisfied if it is ≤ 0.0. The objective function is not drawn in the domain where any of the constraints are violated. The traces show all the evaluations made using an SQP optimisation method from multiple starts along the line $x_1$ =3.0 The SQP method used was by Madsen [1] and based on the Harwell Library Subroutine VE02AD. Alternative starts, for example along the $x_1$ = 0.0 line also find the optimum at [0.5]. The problem lies in being able to extend plots like this to multiple dimensions.

The results achieved for this optimisation depend on which constraints are active when the problem is solved. The four possible local minima occur where the constraint boundaries intersect:

- x = (0, 5), *Ob*(x) = -25, constraints I and 5 active;
- x = (2.116, 4.174), *Ob*(x) ≈ -21.90, constraints 4 and 5 active;
- x = (5, 2), *Ob(x)* =-29, constraints 3 and 4 active;
- and x = (6, 0), *Ob*(x) = -36, constraints 2 and 3 active.

The global optimum, the optimum of all the local optima, is at x = (6, 0), *Ob*(x) = -36, with constraints 2 and 3 active

A good SQP algorithm would be one which would find all the local optima at intersections of the constraint boundaries and then the designer would inspect these and find the best answer from them. At this point he may also wish to take additional considerations into account.

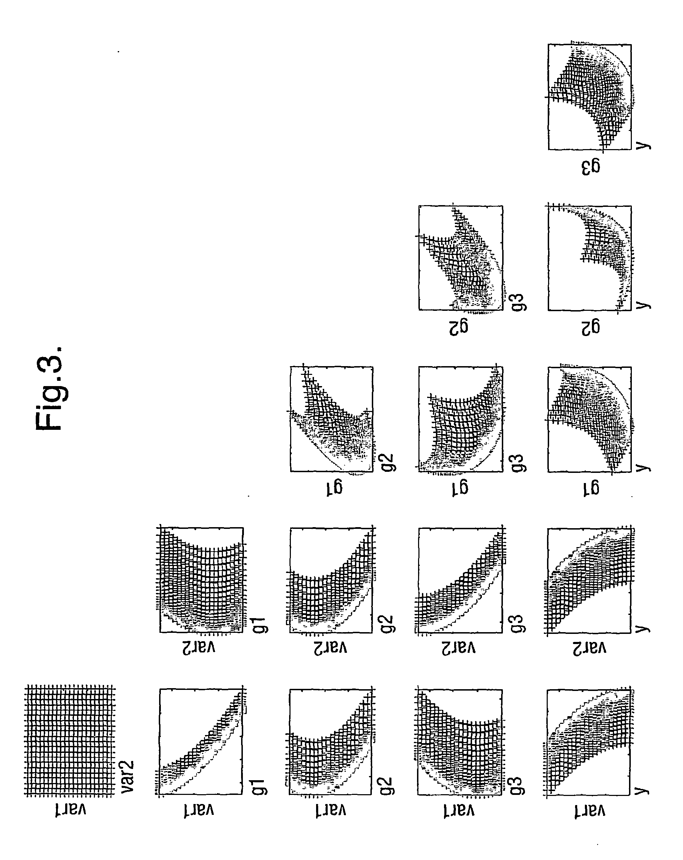

Additional plots can be used to further interrogate the data. First, a series of scatter plots can be drawn as shown in Figure 3, in which every item of data can be plotted against every other item of data that is, of every dependent and independent variable of interest against every other variable. Scatter plots are widely used by the statistics community, see for example [10]. These plots enable a good appreciation of the design space and to establish whether or not known trends are being followed. This process confirms for instance the nature of the design of experiments (DoE). Here, design variable 1 and design variable 2 are chosen at every corner point of a mesh, which subdivides the design space equally. The quadratic nature of the constraints is also discernible. Alternatives to this include parallel co-ordinates [11, 12] or SOM's). These latter methods also enable relationships between variables to be obtained [14] and, possibly, to establish the most important variables in the problem.

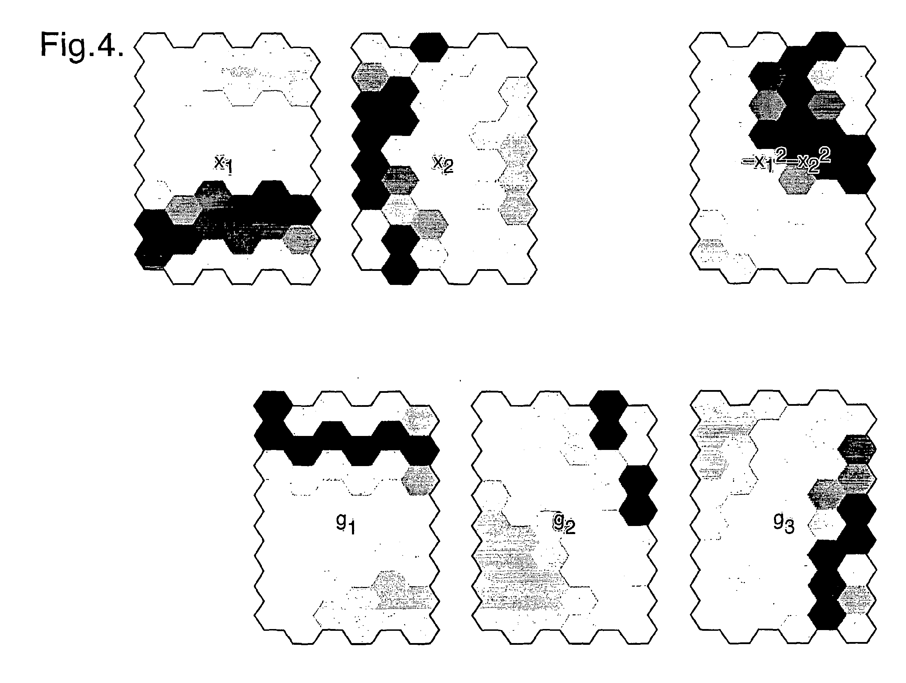

Figure 4 shows a set of SOM's for this data. The directions of $x_1$ and $x_2$ are horizontal and vertical respectively, showing that they are orthogonal in the design space. The objective $(-X_1^2-X_2^2)$ is monotonically related to $c_2$ as the diagonal lines go in the same directions and the colour changes from bottom left to top right. $x_1$ and $c_1$ are shown to be inversely related as the colours are in the opposite directions, but still horizontal in both maps. Similarly $c_3$ is inversely related to $x_2$. The functions $c_1$, $c_2$, $c_3$ and the objective are all circular. (See U.K. patent application No. 0228751.4).

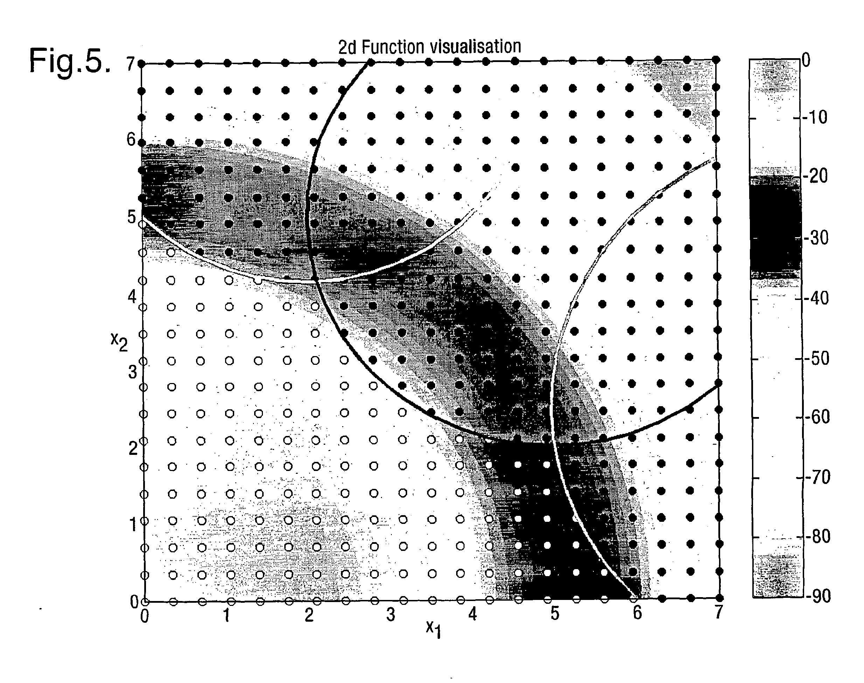

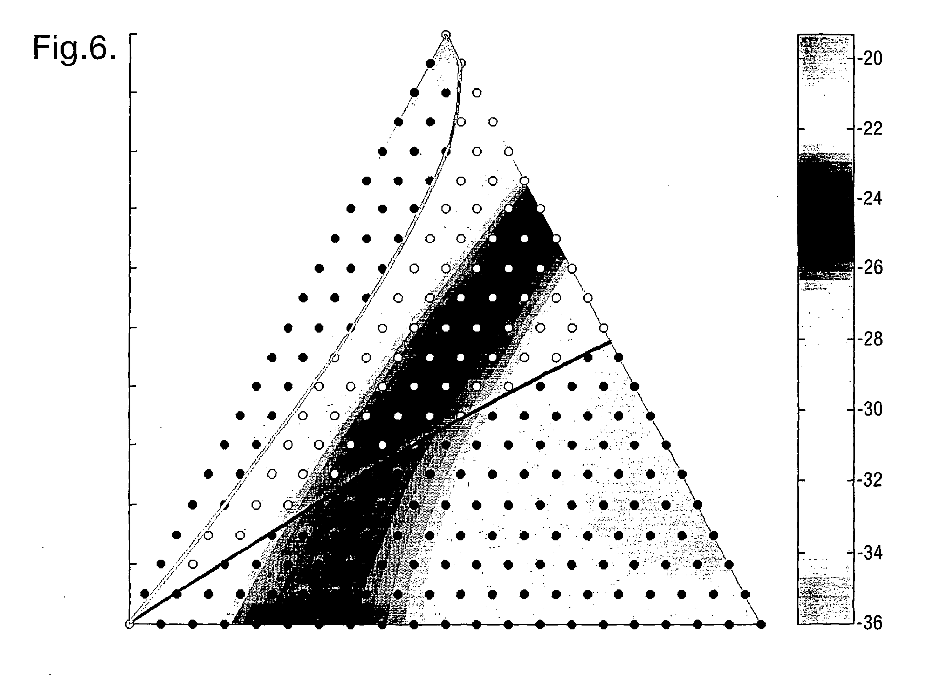

Although the SOM appears to be able to detect relationships between functions it does not facilitate the scrutiny of play off between domain constraints. In addition the location of function minima is also desirable, along with tracking the paths of optimisations. These properties can all be identified, for a 2-dimensional problem in Figure 2. An alternative representation of Figure 2 is shown in Figure 5. Note that in the Figure the feasible region is denoted by the white circles and the infeasible by the black circles. The full extent of the constraints is also shown. Thus, the complete domain is shaded and the feasible and infeasible regions are determined by the colour of the circles. The circles represent the DoE and are drawn for every other point in the design space. The complete extent of the constraints is shown. This representation follows the annotation of Grossman et al [16], in which a 28 dimensional space is represented as a triangle. The triangle in [16] is a mapping of 28 dimensional vectors into 2-D, 3 points are chosen to form the corners of the triangle. These may be local optima or perhaps two local optima and one intermediate point. All the intermediate points are then obtained as being a certain distance away from these reference points. The actual objective and constraints are then plotted as usual in a 2-D plot. A fourth reference point would then be required to turn the 2-D representation into a solid object. This technique necessarily incurs a loss in data structure, and a triangle is a relatively complicated mapping, particularly in higher dimensions. To understand the limitations of this method this mapping is presented for the circular function in Figure 6 and can be compared directly with Figure 5, except that the extent of the colour map is reduced in the triangular representation. Additional points outside the triangle could also be obtained by extrapolation. Note that in Figure 6 the optima at x=[6,0], x=[5,2] and x=[2.116,4.174] form the corners. Intermediate points are obtained by interpolation. Although this transformation could provide some appreciation of a high dimensional space the problem with it is that the space extent is unknown. As such it can be used to appreciate space around known points in the domain, but whether all the optima are captured or the required amount of space has been visualised is not known.

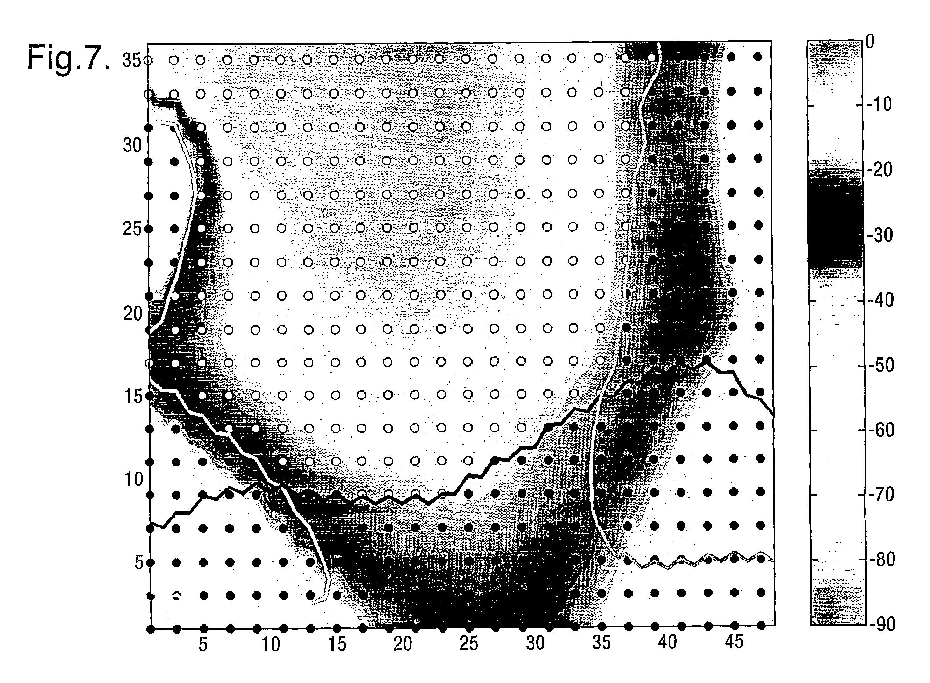

A transform is required which has a better 2-D manifold. The SOM is a projection and visualisation of a high-dimensional signal space on a two-dimensional display. Therefore it should be possible to use the SOM rather than a triangle for the 2-D manifold. Returning to the SOM it is clear that the tessellated hexagons used previously are relatively coarse. In fact, a much finer, rectangular definition is possible. The equivalent SOM to Figure 5 is next shown in Figure 7. However, the SOM is found not to give very good results and the mapping from topographic space to the data space is only defined at the location of the nodes.

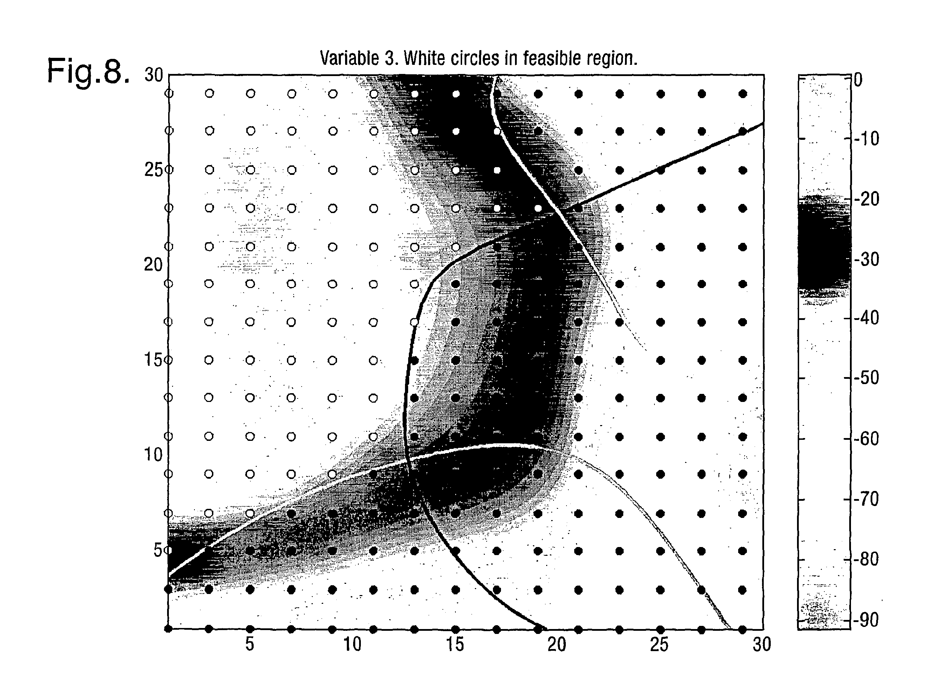

The Generative Topological Mapping (GTM) is intended as an alternative computation of the SOM, in an attempt to define the metric relations between the models on the map grid with improved fidelity to those in the data space. The trade-off is a higher computational cost. The equivalent GTM to Figure 5 is shown in Figure 8. The orientation of these maps is always somewhat arbitrary, so rotation through 90 degrees anticlockwise shows a very similar representation compared to Figure 5. This transformation will now be applied to a military aircraft design problem.

Military Aircraft Design Problem Specification

The problem is to minimise the drag coefficient ($C_D$) of a representative Military Aircraft trapezoidal body/wing tail-less aircraft in cruise at $M=0.85$, subject to:

**5-D Problem:**

$-3.0 \leq$ wing linear twist (washout, $\theta$) $\leq 7.0$
$-3.0 \leq$ wing angle of attack ($\alpha$) $\leq 7.0$
$0.0 \leq$ mid - camber $\leq 0.07$
$0.0 \leq$ flap deflection angle ($\delta$) $\leq 10.0$
$9.557 \leq$ leading edge (l.e.) tip location $\leq 14.227$
$C_L \geq 0.1994$

$$C_{mtotal} = C_{mle} + hC_L \cos\alpha + hC_D \sin\alpha$$
$$\Rightarrow c_1 = \frac{C_L + a_3}{-\dfrac{C_{mle}}{h\cos\alpha} - C_D \tan\alpha + a_3} = 1.0$$

**8-D Problem:**

$-0.01 \leq$ Root Camber at 30%$\bar{c} \leq 0.025$
$-0.01 \leq$ Root Camber at 60%$\bar{c} \leq 0.04$
$-0.01 \leq$ 50% Semi-span Camber at 30%$\bar{c} \leq 0.025$
$-0$-$01 \leq$ 50% Semi-span Camber at 60%$\bar{c} \leq 0.04$
$-0.01 \leq$ Tip Camber at 30%$\bar{c} \leq 0.025$
$-0.01 \leq$ Tip Camber at 60%$\bar{c} \leq 0.04$
$0° \leq \alpha \leq 7°$
$-3° \leq \theta \leq 3°$
subject to the constraints:
$C_L > 0.1994$ and $|C_m| < 0.02$

**14-D Problem:**

$-0.01 \leq$ Centre line Camber at 20%$\bar{c} \leq 0.02$
$-0.01 \leq$ Centre line Camber at 40%$\bar{c} \leq 0.03$
$-0.01 \leq$ Centre line Camber at 70%$\bar{c} \leq 0.03$
$-0.01 \leq$ 40% semi-span Camber at 20%$\bar{c} \leq 0.02$
$-0.01 \leq$ 40% semi-span Camber at 40%$\bar{c} \leq 0.03$

-0.01 ≤ 40% semi-span Camber at 70%$\bar{c}$ ≤ 0.03
-0.01 ≤ 70% semi-span Camber at 20%$\bar{c}$ ≤ 0.02
-0.01 ≤ 70% semi-span Camber at 40%$\bar{c}$ ≤ 0.03
-0.01 ≤ 70% semi-span Camber at 70%$\bar{c}$ ≤ 0.03
-0.01 ≤ Tip Camber at 30%$\bar{c}$ ≤ 0.02
-0.01 ≤ Tip Camber at 50%$\bar{c}$ ≤ 0.03
-0.01 ≤ Tip Camber at 60%$\bar{c}$ ≤ 0.03
$1° \leq \alpha \leq 7°$
$-3° \leq \theta \leq 3°$
subject to the constraints:
$C_L$>0.1994 and |$C_m$|<0.02

where $C_L$ is the lift coefficient and $C_m$ the pitching moment coefficient.
CFD evaluations are performed using the BAE SYSTEMS in-house code FLITE3D [8] in inviscid, Euler mode.

Visualisation

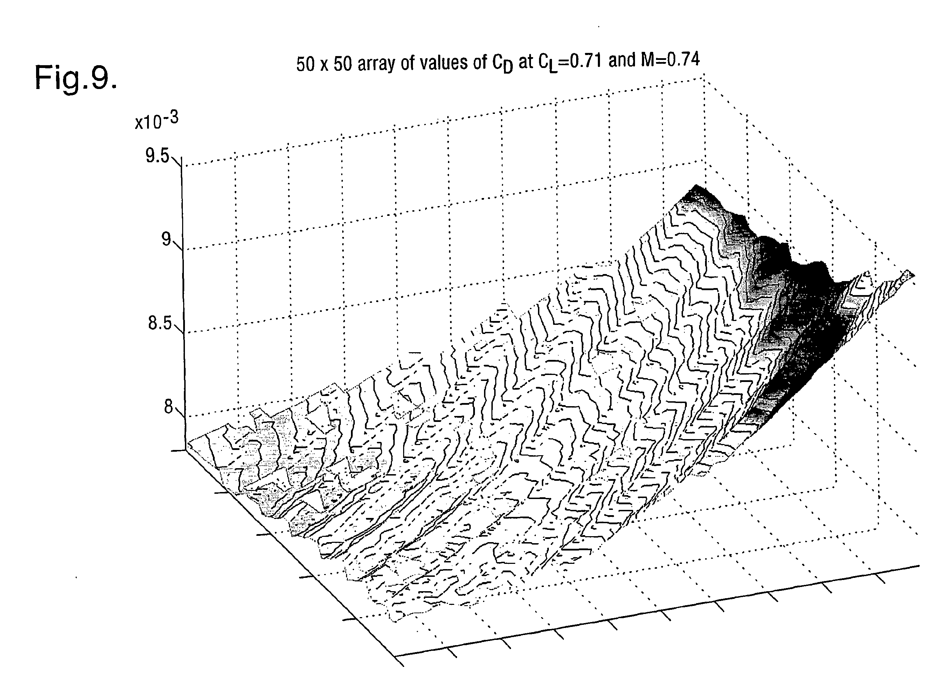

Figure 9 shows a visualisation of a related two-dimensional design space, with computational noise and failed evaluations. (Here, a simpler solver is used with two trailing edge parameters to reduce the computational cost so that a large number of evaluations is possible.) This corresponds to 50x50 evaluations of a two-dimensional design space ($C_D$ at $C_L$=0.71, M=0.74) using a 2-D panel method. The two-dimensional design space describes the vertical movement of two B-spline poles adjacent to the trailing edge of an aerofoil. Computational noise often causes ridges in the design space, see also, for instance [9]. It is clear that gradient searches in this domain will not find the global optimum, but a local one, stopping at the bottom of a ridge. These problems are likely to be amplified in higher dimensional space. Inability to visualise high dimensional spaces can lead to an inability to fully exploit the additional flexibility. Computational noise and expensive evaluation naturally leads to the use of response surface methodologies in design space optimisation.

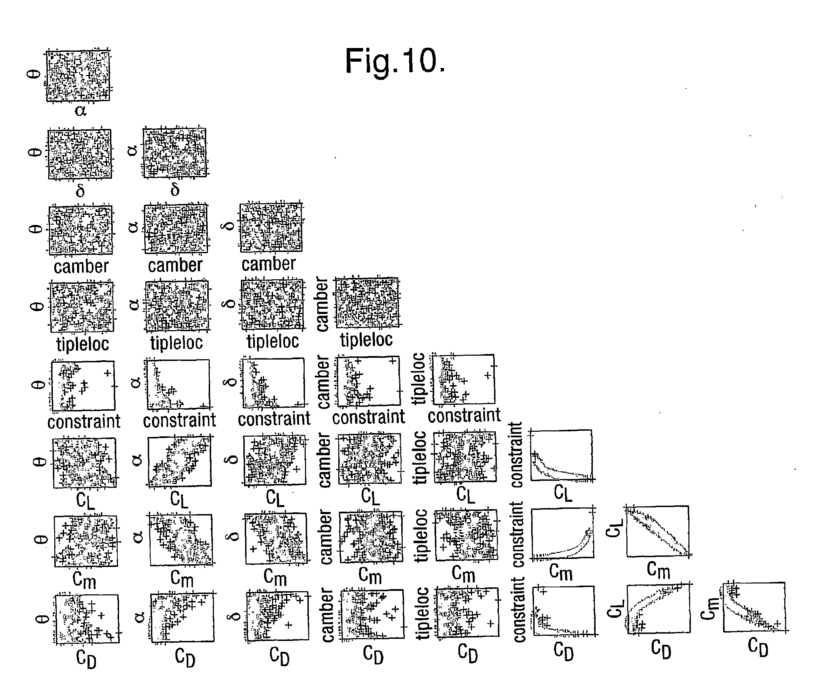

Figure 10 shows the scatter plots for the 5-D military aircraft problem. In these, for instance, the quadratic nature of the relationship between $C_L$ and $C_D$ of every dependent and independent variable in the 5-D problem against every other variable can easily be identified. Additionally the independent variables show no relation with each other as should be expected given the DoE used to collect the data.

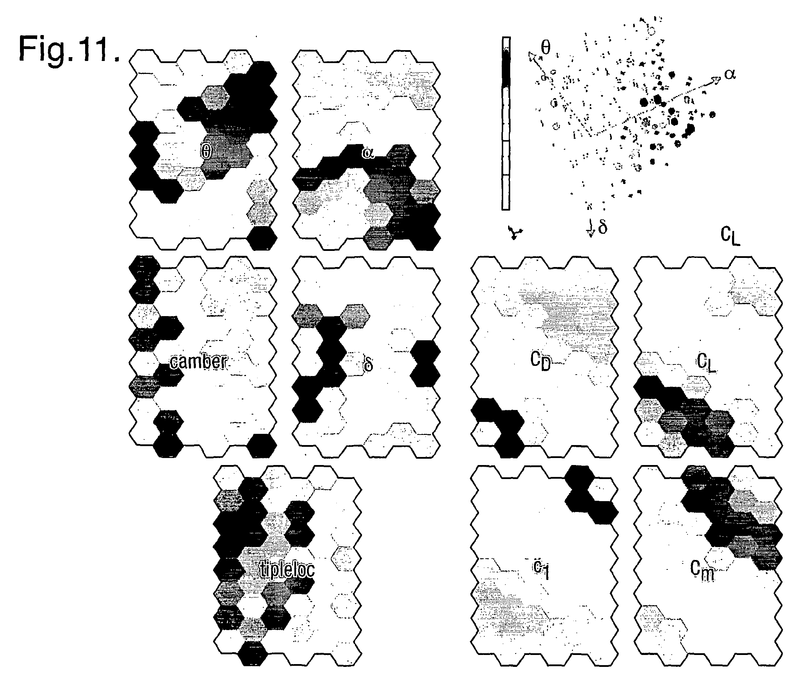

Figure 11 shows a set of SOM's for the 5-D military aircraft problem. To orient oneself with the SOM's it is necessary first to look at the picture of the glyphs shown top right. In this image, each of the glyphs is placed according to the value of $\alpha$, $\theta$ and $\delta$ and are coloured according to the value of $C_L$. The SOM is a diagrammatic representation rather than a physical map of the design space, as illustrated by comparison between the SOM of $C_L$ and the glyph image: the trends of the data are the same and have similar features. Consider the $C_L$ SOM tile, it varies from red through green to purple across the diagonal. In the glyph image, the same variation can be seen from top left to bottom right. In the SOM's the diagonal trends of the maps of $C_D$, $C_L$, $C_m$, **trim** and $\alpha$ show that they are all related ($C_D$, $C_L$, $\alpha$ monotonically and inversely to $C_m$ and **trim**). The SOM's also show that the independent variables in the problem are unrelated, as they should be, given a suitable DoE. In higher dimensional problems, the SOM has been shown to indicate the first two principal components, as their SOM's can be related although in opposite directions (*e.g.* in opposite diagonal directions or vertically and horizontally). Bland regions in the SOM give an indication of rogue data (*e.g.* from unconverged CFD evaluations) and completely bland SOM's can help to identify unimportant variables.

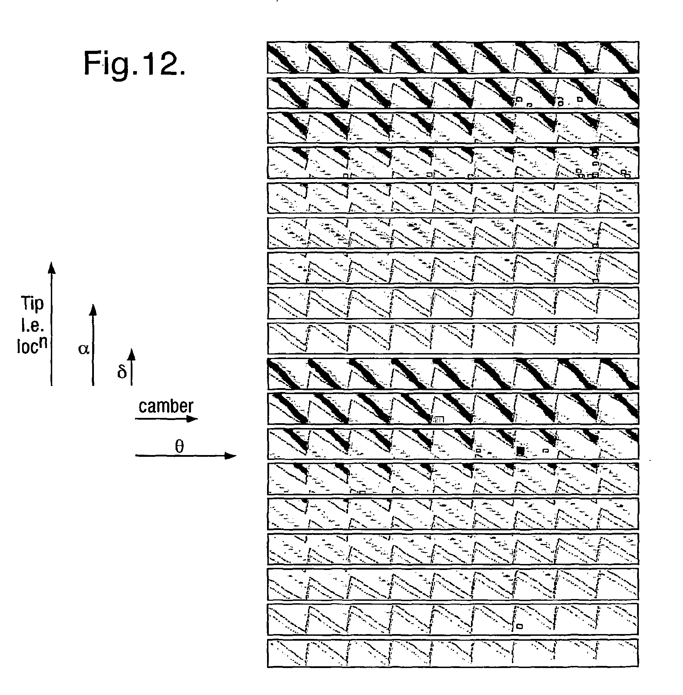

Figure 10 and Figure 11 are not easy to interpret, and the next question is whether or not the type of visualisation presented in Figure 2 can be extended to higher dimensions to provide equally useful information. 200 CFD evaluations were used to obtain the Krig. Figure 12 shows a hierarchical axes technique (HAT) plot after [15] noting that filled squares denote optima located in the model using different optimisation methods. The other squares show the locations of evaluations in the final stages of simulated annealing of the response surface. The value of $C_D$ is coloured within the tile. Colouring does not take place if the inequality constraint on $C_L$ is violated. The contour lines are contours of trim constraint. As shown in the Figure, within an individual tile camber and $\delta$ vary. As one goes from tile to tile in the horizontal direction of the main plot $\theta$ varies and in the vertical direction $\alpha$ varies. Then the top 81 tiles of this image represent the highest value of the fifth design variable, leading edge tip location. Each block of 81 tiles going down then represent lowering values of leading edge tip location. Only the top of this image is presented so that the smaller tiles are seen clearly. Two optima are shown: the first the result of a simulated annealing optimisation (red square) and the second the result of an exhaustive search in the representation data. This visualisation is similar in spirit to the triangles used in Figure 6 and [16], but with a less complex design space transformation. The HAT plot can however, only be used for data appreciation in up to 6 dimensions, as the tiles become too small thereafter. This picture is only possible because response surface methodologies enable the large amount of data required for plotting to be provided. The image gives confidence that the same optimum is being located in both cases and that the curve fit is well behaved.

Results from the RSM Kriging Process

To validate the RSM Kriging procedure some results from this process are given in Table 1. The variation in the results given in Table 1 could be cause for concern, except that reference to the visualisation shows that these results are close to each other and are therefore close to the same optimum. The CFD result is significantly different from the RSM, which means that there is mileage in building a new model, including this optimum and iterating until the optimum and CFD result obtained converge. The loading distribution and geometry of the final configuration are shown in Figure 14. In this case the loading distribution is nearly elliptic, as required, except for the compensation for wave drag in the outboard wing. The sweep is reduced compared to the initial configuration as large amounts of sweep give a large amount of downward pitching moment, which has been reduced. During a large number of optimisations of similar design spaces, in general there seem to be two optima in these design spaces. The second is an optimum in which the result is below the elliptic loading distribution at the root and above it at the tip. This has a deleterious effect on root bending moment (*i.e.* increases it) and hence the structural optimum is worse and so in general the aerodynamics community chooses the answer presented here.

The GTM in the 5-D problem

Instead of Kriging the three design parameters of interest separately, in the SOM and GTM all the parameters of interest: the design variables, the objective and the constraints are transformed into the lower dimensional space **y (x,W).** The thesis in which the GTM is developed [18] offers the visualisations posterior mean and mode projection, the responsibilities and the magnification factors. This latter plot is a single image representing **y(x,W).** However, instead the inventors use the individual components of the vector **y(x,W)** pertaining to the variables of interest in the problem. From these components the penalty function can be obtained and plotted, with contours of $C_L$ and *trim,* where *p(x)* is given by:

$$p(\mathbf{x}) = C_D + |c_1 - 1.0| + <(C_{L_{total}} - C_L)/C_{L_{total}}>,$$

Where <> are MacCauley brackets, in which the contents become zero if the function therein is negative, else the value of the function is used.

Figure 13 shows an image map representation of transformed data in 2-D latent design space y (x,w) in accordance with an embodiment of the invention. More particularly, this image map representation is provided by application of the GTM transformation for the 5-D aircraft design problem. Note that the penalty function is shown in the Figure, obtained from a combination of latent spaces for $C_L$, $C_D$ and $C_m$, with contours of the latent spaces of $C_L$ and *trim.* The cross marks the optimum, that is the point where $C_D$ is the lowest and both $C_L$ and *trim* are satisfied. Here, a 60×60 latent space of 15×15 radial basis function (RBF) centres was used. Transformation back into real space gives the corresponding values of $x_1$, $x_2$, $x_3$, $x_4$ and $x_5$. These results are given in Table 2. The agreement between the CFD and GTM is excellent and the result is better than the preliminary result obtained using Kriging. Comparison between the GTM and Kriging results is also shown in Figure 14. This Figure shows a loading distribution of optimised wing design using kriging and the 5-D inventive GTM in accordance with an embodiment of the invention. Also shown are the starting and final CFD models. The GTM result is better as it is closer to an elliptic loading distribution. The new point could also now be used to build a new GTM, if desired, as the optimum could be used to build a new Krig model.

Use of the GTM for higher dimensional optimisation

The GTM was also used to optimise aerodynamic design spaces in 8 and 14 dimensions. In both cases a 60×60 latent space was used with 30×30 RBF centres. The visualisations are shown in Figure 15 and Figure 16 respectively. Note that Figure 15 is shown orientated in such a way to show similarity to the 14-D GTM shown in Figure 16. The solution to the 8-D problem is at $x_1 = 0.05058$, $x_2 = 0.01256$, $x_3 = 0.005531$, $x_4 = 0.00668$, $x_5 = 0.00953$, $x_6 = -0.00360$, $x_7 = 4.8462$, $x_8 = 1.7266$, with the GTM model after a number of iterations and the CFD solution being $C_L = 0.2022$, $C_D = 58.83$ *counts, $C_m$ = -0.00359661.* This is probably reasonable compared to other optimisations, for instance a 3-D gradient search also gave $C_D$= 58.8 counts, with $C_L$=0.1994 and $C_m$=0.02 (higher $C_L$ and lower $C_m$ in this case), although there is probably more to come as the GTM solution is not on the boundary. This could possibly be found using a gradient search. The GTM in conjunction with an optimisation method does not seem to work as well in 14-D as in lower dimensions. It is probable that this is because the transformation is doing more i.e. going from 14-D to 2-D. To ameliorate this it should be possible for higher dimensions to transform to 4-D and view using the HAT plot discussed previously. The distinct similarities between Figure 15 and Figure 16 are evident and significant because they show that the same problem is being solved in both cases. It may assist in the future when trying to ascertain whether or not more limited sets of design variables can be used to adequately represent problems to compare the 2-D design spaces of both the lower and higher dimensional representations of the problem.

Figure 17 shows a Hierarchical Axes Technique (HAT) plot of the 6D Hartmann function [Dixon and Szego [21]]. This function is a multimodal function with two identifiable local optima. As shown in the Figure, the 4D GTM transformation can be used to obtain an improved optimum over the 2D GTM transformation. Note that the 2D GTM and 4D GTM results are represented by circles and diamonds, respectively.

Figure 18 shows another image map representation of transformed data, as obtained from a 2D GTM transformation of the 6D Hartmann function. As shown, the optima are represented by triangle symbols. Note that the triangle symbols correspond to the 2D GTM circles as shown in the HAT plot of Figure 17.

Figure 19 shows another image map representation of transformed data, as obtained from a 4D GTM transformation of the 6D Hartmann function. As shown, the optima are represented by triangle symbols. Note that the triangle symbols correspond to the 4D GTM diamond symbols as shown in the HAT plot of Figure 17. The advantage here is that more information can be retained because the transformation step in going from 6D design space to 4D design space is less than that in going from 6D design space to 2D design space.

Figure 20 shows yet another image map representation of transformed data, as obtained from 4D GTM transformation of the 14D aircraft problem. As shown, the optimum is marked by a white square symbol.

Other Potential Applications of the GTM in Design

During the kriging process it is possible to merge high and low fidelity data results. Plots of such data would show similarities and differences in the GTM.

Previous work has considered the use of the GTM in design space search, see [19]. However, here the SOM and GTM are used to predict how a low fidelity model relates to a high fidelity analysis. This inventive work does not consider the optimisation process per se in the lower dimensional representation. In [19] El-Beltagy indicates that the GTM algorithm can also be used as a visualisation tool to understand the discrepancies between the models and so reformulate the optimisation problem, although he does not show how.

Conclusions

A 2-dimensional plot generally provides the best data visualisation. Multiple dimension data needs to be transformed to lower dimensions to enable this. The HAT plot visualisation along with the RSM technology enables visualisation in up to 6 dimensions. The GTM has been shown to provide adequate visualisation and a quantitative graphical method for optimisation up to 14 dimensions. However, the step from 14-D to 2-D may be too large and therefore a 4-D GTM may be more accurate. More points in the 14D RBF and latent space may also improve the GTM.

Visualisation technology helps the designer to spend time inspecting results and ensuring correctness rather than dealing with large volumes of flow data. After a large number of numerical evaluations have been performed there is a need to identify any off trend results. The scatter plot method presented here is ideal for this purpose. The SOM also helps with this to give an overview. Response surface method technology eliminates inefficient design space sampling in the final stages of a gradient search optimisation. A balance is required between the number evaluations in the DoE, the number of cycles in the CFD, the number of points in the initial DoE and the number of further evaluations used. The trade-off between low-dimensional comprehension and high-dimensional accuracy impacts optimisation.

These type of visualisation methodologies are utilised to support design decisions such as the relative scaling of the design variables and constraints and choice of penalty function, which are important in optimisation. Also possible is the recognition of problems such as numerical noise and boundaries of evaluation failure. Initial design of experiments can be improved in a systematic way by calculation of additional points dictated by maps of statistical and other error criteria. Significantly, the invention has utility for various aircraft design applications. Also, the invention can be embodied in software, if desired. Although this technology has been developed with reference to aircraft aerodynamic design in particular, the design space visualisation and curve-fitting technology developed is general. It should therefore be equally applicable to other disciplines such as cost analysis, structures and computational electromagnetics, in which expensive analysis tools are used to find optima for complicated design problems. It is expected to be particularly useful in multi-disciplinary design and situations where there are multiple optima in the design space.

Having thus described the present invention by reference to several preferred embodiments, it is to be appreciated that the embodiments are in all respects exemplary and that modifications and variations are possible without departure from the scope of the invention as defined in appended claims. For example, whilst in the described embodiments the transformed data in the low-dimensional (2-D) image map representations are visually inspected, it is equally possible for the inspection to be performed computationally. It is to be also understood that the described inventive transformation technique can be effectively applied to a wide range of high-dimensionality design spaces and that the transformation of data can be suitably performed into any one of a wide range of low-dimensionality design spaces.

It is to be also appreciated that whilst the GTM transformation technique is applied in the described exemplary embodiments, it is equally possible to use alternative transformation techniques, SOM or Neuroscale for example, instead of GTM, so as to realise the inventive technical effect.

References

[1] H. P. Schwefel, Evolution and Optimum Seeking, Sixth Generation Computer Technology. John Wiley and Sons Inc., 1994, ISBN 0-471-57148-2.

[2] K. Madsen and O. Tingleff, "Robust subroutines for non-linear optimisation," Tech. Rep., Institute For Numerical Analysis, Technical University Of Denmark, February 1986.

[3] M.D. McKay, R. J. Beckham and W. J. Conover, "A comparison of three methods for selecting values of input variables in the analysis of output from a computer code.," Techometrics, vol. 21, no. 2, pp. 239-245, 1979.

[4] R.B. Statnikov and J.B. Matusov. MultiCriteria Optimisation and Engineering. Chapman & Hall Publishers, ISBN 0-412-99231-0.

[5] J. Sacks, W. J. Welch, T. J. Mitchell, and H. P. Wynn, "Design and analysis of computer experiments," Statistical Science, vol. 4, no. 4, pp. 409-435, 1989.

[6] D. Jones, M. Schonlau, and W. Welch, "Efficient global optimisation of expensive black-box functions," Journal of Global Optimisation, vol. 13, pp. 455-492, 1998.

[7] D. R. Jones, "A taxonomy of global optimisation methods based on response surfaces," Journal of Global Optimisation, vol. 21, pp. 345-383, 2001.

[8] K. Morgan, J. Peraire and J. Peiro, "Unstructured grid methods for compressible flows", Special Course on Unstructured Grid Methods for Advection Dominated Flows, AGARD Report 787, March 1992.

[9] V. Torczon, C. M. Siefert, and M. W. "Model-assisted pattern search." In Proceedings: First International Workshop on Surrogate Modelling And Space Mapping for Engineering Optimisation, held at the Technical University of Denmark, November 16-18, 2000.

[10] R. A. Bates, R. Fontana, C. Randazzo, E. Vaccarinao and H.P. Wynn, "Empirical Modelling Of Diesel Engine Performance for Robust Engineering Design" In: Statistics for Engine Optimisation pp.163-173, 1998.

[11] Inselberg and B. Dimsdale, "Parallel coordinates: A tool for visualising multi-dimensional geometry," in Proceedings, Visualisation 1990 IEEE CS Press Los Alamitos Calif., 1990, pp. 361-370.

[12] Goel, A., Baker, C., Shaffer, C., Grossman, B., Haftka, R., Mason, W., and Watson, L. (2000). VizCraft: A Problem Solving Environment for Configuration Design of a High Speed Civil Transport. Computing in Science and Engineering to appear. http://citeseer.nj.nec.com/goe100vizcraft.html

[13] T.Kohonen. Self -Organising Maps. Number {ISBN}: 3-540-67921-9. Springer-Verlag, 2000.

[14] P.C. Matthews, The Application of Self-Organising Maps in Conceptual Design, Ph.D. thesis, Fitzwilliam College, University of Cambridge, June 2001.

[15] T. Mihalalisin, J. Timlin, and J. Schwegler, "Visualising multivariate functions, data and distributions," in Readings in Information Visualisation: Using Vision to Think, S. K. Card, J. Mackinlay, and B. Shneiderman, Editors., ISBN 1-55860-533-9, pp. 115-125. Morgan Kaufmann, 1999.

[16] B. Grossman, R. T. Haftka, W. H. Mason, L. T. Watson, C. Baker, S. Balabanov, S. Cox, A. Giunta, H. Kim, D. Knill, and D. Krasteva, "Effective use of surrogate models in aircraft design," Presentation at First International Workshop on Surrogate Modelling and Space Mapping for Engineering Optimisation - held in Lyngby, Denmark, November 16-18th 2000.

[17] N.A.C. Cressie, "Statistics for Spatial Data", Revised Edition, Wiley-Interscience, ISBN-0-471-00255-0, 1993.

[18] M. Svensen, (1998) GTM: The Generative Topographic Mapping. PhD Thesis, Aston University.

[19] M. A. EI-Beltagy, (2000) "A Natural approach to Multilevel Optimisation in Engineering Design", PhD Thesis, University of Southampton.

[20] I. T. Nabney. "Algorithms for Pattern Recognition", ISBN1-85233-440-1. Springer, 2001.

[21] L. C. W. Dixon and G. P. Szego "The optimisation problem: An introduction", New York: North Holland, 1978.

Appendix 1 Kriging

Here, a Kriging approximation using a Gaussian kernel has been used to perform the RSM surface fits, see for instance in Sacks [5] or Jones [6,7]. If **y** is an *(nx1)* vector of responses evaluated at the locations $x_i$, *i=1, ...,n,* where n is the size of the DoE, then the response at the unsampled points $x^*$ is an estimate given by:

$$\hat{y}(\mathbf{x^*}) = \hat{\mu} + \mathbf{r}^T \mathbf{R}^{-1}(\mathbf{y} - \mathbf{1}\hat{\mu})$$

where:

1 is the vector of ones and $\hat{\mu}$ is a weighted mean given by:

$$\hat{\mu} = \frac{\mathbf{1}^T \mathbf{R}^{-1} \mathbf{y}}{\mathbf{1}^T \mathbf{R}^{-1} \mathbf{1}}$$

with:

r being a correlation vector based on the measured and estimated sample points, $X^*$,
**R** is a matrix of correlation coefficients, based on the $x_i$ data points
the (i, j)$^{th}$ entry of R is given by $Corr[x_i, x_j]$ and the $i^{th}$ element of r by $Corr[x_{n+1}, x_i]$ with:

$$Corr[x_i, x_j] = \exp[-\sum_{h=1}^{k} 10^{\theta_h} \left| x_{h,i} - x_{h,j} \right|^{p_h}] \quad \theta_l > 0, l = 1, \dots, k \quad ,$$

for a sample of **k** variables at **n** points.

The hyperparameters $\theta_h$, $p_h$, and the factor on $w_{min}$ in SVD (if used) are optimised by maximising the likelihood function or minimising:

$$\left(\sigma^2\right)^{\frac{n}{2}}|R|^{\frac{1}{2}}$$

Where the variance, $\hat{\sigma}^2$, is given by:

$$\hat{\sigma}^2 = \frac{(\mathbf{y}-\mathbf{1}\hat{\mu})^T \mathbf{R}^{-1}(\mathbf{y}-\mathbf{1}\hat{\mu})}{n}$$

Giving the mean square error of the predictor as:

$$s^2(\mathbf{x}^*) = \sigma^2\left[1 - \mathbf{r}^T \mathbf{R}^{-1}\mathbf{r} + \frac{(1-\mathbf{1}^T\mathbf{R}^{-1}\mathbf{r})^2}{\mathbf{1}^T\mathbf{R}^{-1}\mathbf{1}}\right]$$

Finally, the expected improvement is given by:

$$E[I(\mathbf{x}^*)] = \begin{cases} (y_{min} - \hat{y})\Phi\left(\dfrac{(y_{min}-\hat{y})}{s}\right) + s\phi\left(\dfrac{(y_{min}-\hat{y})}{s}\right) & \text{if the constraints are satisfied} \\ 0 & \text{else} \end{cases}$$

Here, $y_{min}$ is defined as the minimum of the input data, which satisfies the constraints. When considering minimisation, Expected Improvement can have its maximum value where the data is sparse or the approximation has a low value. The strategy is to resample where the Expected Improvement is maximised, then to form a new approximation and repeat.

Where the standard normal density and normal distribution functions are:

$$\phi(\mathbf{x}) = \frac{1}{\sqrt{2\pi}}e^{-\frac{x^2}{2}} \text{ and } \Phi(\mathbf{x}) = \int_{-\infty}^{\mathbf{x}} \frac{1}{\sqrt{2\pi}}e^{-\frac{u^2}{2}}\,du$$

If the Euclidean norm is given by $\|z\|$ the linear and thin plate spline radial basis functions are given as:

$$Corr[x_i, x_j] = \|\mathbf{z}\|$$

$$Corr[x_i, x_j] = \|\mathbf{z}\|^2 \log(\|\mathbf{z}\|)$$

These Equations do not provide kernels suitable for tuning or error analysis with statistical interpretation. It should be noted that alternative kriging algorithms are also widely used, which use the variogram instead of the correlation, see for example [17].

Appendix 2: Summary of the GTM algorithm

The GTM is a non-linear parametric mapping y(x,W) from an L-dimensional latent space to a D dimensional data space, where normally, L<D, as illustrated in Figure 21. The sequence of steps for constructing a GTM model is given in [18] as:

Generate the grid of latent points: $\{x_k\}$, $k = 1, \dots , K$.

Generate the grid of basis function centres: $\{\mu_m\}$, m = 1, ... ,M .

Select the basis function width $\sigma$.

Compute the matrix of basis function activations, $\Phi$.

Initialise W, randomly or using PCA.

Initialise $\beta$.

If desired, select a value for $\alpha$.

$$\text{Compute } \Delta, \ \Delta_{kn} \ = \ \left\| t_n - \Phi_k \mathbf{W} \right\|^2 .$$

Repeat

$$\left. \begin{array}{l} \text{Compute } \mathbf{R} \text{ using } \Delta \text{ and } \beta. \\ \text{Compute } \mathbf{G} \text{ using } \mathbf{R}. \end{array} \right\} \text{E-step}$$

$$\left. \begin{array}{l} \mathbf{W} = (\Phi^{\mathbf{T}}\mathbf{G}\Phi + \lambda \mathbf{I})^{-1} \Phi^{\mathbf{T}}\mathbf{R}\mathbf{T}, \text{ where } \lambda \text{ may be zero.} \\ \text{Compute } \Delta, \ \Delta_{kn} \ = \ \left\| t_n - \Phi_k \mathbf{W} \right\|^2 \\ \text{Update } \beta, \text{ using } \mathbf{R} \text{ and } \Delta. \end{array} \right\} \text{M-step}$$

Until convergence

The squared distances required to update $\beta$ in the M-step gets 'reused' when calculating the responsibilities in the following E-step. In our case we use the implementation of this formulation by Ian Nabney of Aston University in Netlab, [20].

**Claims**

1. A method of designing an aerodynamic surface by transforming data from a high-dimensional to low-dimensional design space using a data processing system and deriving an optimum value for a predetermined function representative of the transformed data in the low-dimensional design space, which derivation is further effected in the low-dimensional design space in dependence upon an inspection of the transformed data and wherein the value derivation is further effected by generating an image map representation of the transformed data in the low-dimensional design space, and visually identifying an intersecting region in the image map representation, which intersecting region provides an indication of said value.

2. A method as claimed in claim 1 wherein the value is derived by (a) establishing a mathematical combination of a number of independent design variables and dependent design variables relating to the function, and (b) modifying said combination in the low-dimensional design space to derive therefrom the desired value for the function at which various constraints associated with the function are satisfied and at which the function has a conditional high or low value in relation to other possible values of the function which are determined in accordance with the modification of said combination.

3. A method as claimed in claim 1 or 2 wherein said transformation into the low-dimensional design space is performed by application of a Generative Topographic Map technique.

4. A method as claimed in any preceding claim, comprising the step of transforming data from a first high-dimensional design space and from a second, different high-dimensional design space into a low-dimensional design space, comparing the different transformed data sets in said low-dimensional design space and identifying therefrom similarities between the different transformed data sets to indicate a correspondence between the first and second high-dimensional design spaces.

5. A method as claimed in claim 4 wherein the first high-dimensional design space is a 5-dimensional design space, the second high-dimensional design space is an 8-dimensional design space, and the low-dimensional design space is a two-dimensional design space.

6. A method as claimed in any preceding claim for application to an aircraft design.

7. A program element comprising program code operable to carry out a method as claimed in any preceding claim.

8. The program element of claim 7 on a carrier medium.

9. A data processing system adapted and arranged to carry out a method as claimed in any of claims 1 to 6.

**Patentansprüche**

1. Ein Verfahren zum Entwerfen einer aerodynamischen Oberfläche durch das Transformieren von Daten aus einem hochdimensionalen in einen niedrigdimensionalen Entwurfsraum unter Verwendung eines Datenverarbeitungssystems und Ableiten eines Optimalwerts für eine vorbestimmte Funktion, die für die transformierten Daten in dem niedrigdimensionalen Entwurfsraum repräsentativ ist, wobei die Ableitung ferner in dem niedrigdimensionalen Entwurfsraum in Abhängigkeit von einer Begutachtung der transformierten Daten vorgenommen wird und wobei die Wertableitung ferner durch das Erzeugen einer Darstellung der transformierten Daten mit verweissensitiver Grafik in dem niedrigdimensionalen Entwurfsraum und durch visuelles Identifizieren eines Schnittbereichs in der Darstellung mit verweissensitiver Grafik vorgenommen wird, wobei der Schnittbereich ein Anzeichen des Wertes bereitstellt.

2. Verfahren gemäß Anspruch 1, wobei der Wert abgeleitet wird, indem (a) eine mathematische Verknüpfung einer Anzahl unabhängiger Entwurfsvariabeln und abhängiger Entwurfsvariabeln, die sich auf die Funktion beziehen, aufgestellt wird und (b) die Verknüpfung in dem niedrigdimensionalen Entwurfsraum modifiziert wird, um daraus den gewünschten Wert für die Funktion abzuleiten, bei dem verschiedene Randbedingungen, die mit der Funktion verbunden sind, erfüllt werden und bei dem die Funktion einen bedingten hohen oder niedrigen Wert in Bezug auf andere mögliche Werte der Funktion, die gemäß der Modifizierung der Verknüpfung bestimmt werden, aufweist.

3. Verfahren gemäß Anspruch 1 oder 2, wobei die Transformation in den niedrigdimensionalen Entwurfsraum durch die Anwendung einer Technik mit erzeugender topographischer Abbildung durchgeführt wird.

4. Verfahren gemäß einem der vorhergehenden Ansprüche, das den Schritt des Transformierens von Daten aus einem ersten hochdimensionalen Entwurfsraum und aus einem zweiten, anderen hochdimensionalen Entwurfsraum in einen niedrigdimensionalen Entwurfsraum, des Vergleichens der unterschiedlichen transformierten Datensätze in dem niedrigdimensionalen Entwurfsraum und des Identifizierens daraus von Ähnlichkeiten zwischen den unterschiedlichen transformierten Datensätzen, um eine Übereinstimmung zwischen dem ersten und dem zweiten hochdimensionalen Entwurfsraum anzuzeigen, beinhaltet.

5. Verfahren gemäß Anspruch 4, wobei der erste hochdimensionale Entwurfsraum ein 5-dimensionale Entwurfsraum ist, der zweite hochdimensionale Entwurfsraum ein 8-dimensionaler Entwurfsraum ist und der niedrigdimensionale Entwurfsraum ein zweidimensionaler Entwurfsraum ist.

6. Verfahren gemäß einem der vorhergehenden Ansprüche zur Anwendung auf den Entwurf eines Luftfahrzeugs.

7. Ein Programmelement, das einen Programmcode beinhaltet, der betriebsfähig ist, um ein Verfahren gemäß einem der vorhergehenden Ansprüche auszuführen.

8. Programmelement gemäß Anspruch 7 auf einem Trägermedium.

9. Ein Datenverarbeitungssystem, das angepasst und eingereichtet ist, um ein Verfahren gemäß einem der Ansprüche 1 bis 6 auszuführen.

**Revendications**

1. Une méthode de conception d'une surface aérodynamique par la transformation de données d'un espace de conception de dimensionnalité supérieure à un espace de conception de dimensionnalité inférieure grâce à l'utilisation d'un système de traitement de données et la dérivation d'une valeur optimale pour une fonction prédéterminée représentative des données transformées dans l'espace de conception de dimensionnalité inférieure, laquelle dérivation est de plus effectuée dans l'espace de conception de dimensionnalité inférieure en subordination à une inspection des données transformées et dans laquelle la dérivation de la valeur est de plus effectuée par la génération d'une représentation en carte image des données transformées dans l'espace de conception de dimensionnalité inférieure, et l'identification visuelle d'une région d'intersection dans la représentation en carte image, laquelle région d'intersection fournit une indication de ladite valeur.

2. Une méthode telle que revendiquée dans la revendication 1 dans laquelle la valeur est dérivée par (a) l'établissement d'une combinaison mathématique d'un certain nombre de variables de conception indépendantes et de variables de conception dépendantes se rapportant à la fonction, et (b) la modification de ladite combinaison dans l'espace de conception de dimensionnalité inférieure pour en dériver la valeur souhaitée pour la fonction à laquelle des contraintes diverses associées à la fonction sont satisfaites et à laquelle la fonction a une valeur conditionnelle supérieure ou inférieure par rapport à d'autres valeurs possibles de la fonction qui sont déterminées conformément à la modification de ladite combinaison.

3. Une méthode telle que revendiquée dans la revendication 1 ou la revendication 2 dans laquelle ladite transformation dans l'espace de conception de dimensionnalité inférieure est exécutée par l'application d'une technique de carte topographique générative.

4. Une méthode telle que revendiquée dans n'importe quelle revendication précédente, comprenant l'étape de transformation de données d'un premier espace de conception de dimensionnalité supérieure et d'un deuxième espace de conception de dimensionnalité supérieure différent en un espace de conception de dimensionnalité inférieure, de comparaison des différents jeux de données transformées dans ledit espace de conception de dimensionnalité inférieure et d'identification à partir de celle-ci de similarités entre les différents jeux de données transformées pour indiquer une correspondance entre les premier et deuxième espaces de conception de dimensionnalité supérieure.

5. Une méthode telle que revendiquée dans la revendication 4 dans laquelle le premier espace de conception de dimensionnalité supérieure est un espace de conception à 5 dimensions, le deuxième espace de conception de dimensionnalité supérieure est un espace de conception à 8 dimensions, et l'espace de conception de dimensionnalité inférieure est un espace de conception à deux dimensions.

6. Une méthode telle que revendiquée dans n'importe quelle revendication précédente destinée à être appliquée à la conception d'un aéronef.

**7.** Un élément de programme comprenant un code programme pouvant être utilisé pour mettre en exécution une méthode telle que revendiquée dans n'importe quelle revendication précédente.

**8.** L'élément de programme de la revendication 7 sur un support.

**9.** Un système de traitement de données adapté et agencé pour mettre en exécution une méthode telle que revendiquée dans n'importe lesquelles des revendications 1 à 6.

Fig.1.

Specify problem

DOE

RSM

What DOE ?
Latin Hypercube
Minimax
Full Factorial
Lp $\tau$
Random

No. of points?
10, 45, 200?

RBF

Linear    x
Cubic    $x^3$
Thin plate spline $x^2 \log x$
Multiquadric    $(x^2 + k^2)0.5$

KRIG

$$e^{-\sum_{h=1}^{k} \theta_h |x_h^i - x_h^j|^{p_h}}$$

(Gaussian process)

Tune ?

Polynomial Interpolation

Shepard

What to RSM ?
Forces and moments
or derived quantities

Update Strategy
- based in visual
inspection of maps

Maximise expected improvement

Best point

More space filling

Zoom (subject DOE)

Reduce to a 4D problem by screening (e.g. PCA?)

Fig.2.

Fig.3.

Fig. 4.

Fig.5.

2d Function visualisation

$x_2$

$x_1$

EP 1 673 732 B1

Fig.6.

EP 1 673 732 B1

Fig.7.

EP 1 673 732 B1

Fig.8. Variable 3. White circles in feasible region.

Fig.9.

50 x 50 array of values of $C_D$ at $C_L$=0.71 and M=0.74

Fig.10.

Fig.11.

EP 1 673 732 B1

# Fig.12.

Fig.13.

Variable 10. White circles in feasible region.

Fig.14.

Comparison between actual and elliptic loading

EP 1 673 732 B1

Fig.15.

Penalty function. White circles in feasible region.

## Fig.16.

Penalty function. White circles in feasible region.

Fig.17.

SA
2D GTM
4D GTM

EP 1 673 732 B1

Fig.18.

Fig.19.

Hartmann function

Fig.20.

Penalty function. White circles in feasible region.

EP 1 673 732 B1

Fig.21.

EP 1 673 732 B1

TABLE 1

| Method | $x_1$ | $x_2$ | $x_3$ | $x_4$ | $x_5$ | $c_1$ | $C_L$ | $C_D$ |
|---|---|---|---|---|---|---|---|---|
| Simulated annealing on response surfaces | 3.583 | 5.1936 | 1.1835 | 0.0156 | 10.2366 | 1.0000 | 0.1993 | 68.07e-04 |
| Additional CFD evaluation | 3.583 | 5.1936 | 1.1835 | 0.0156 | 10.2366 | 1.0004 | 0.2035 | 86.31e-04 |

TABLE 2

| Method | $x_1$ | $x_2$ | $x_3$ | $x_4$ | $x_5$ | trim | $C_L$ | $C_D$ |
|---|---|---|---|---|---|---|---|---|
| 5D GTM | 2.7877 | 4.0083 | 0.5342 | 0.0506 | 10.1614 | 0.9803 | 0.1966 | 0.0064 |
| Additional CFD evaluation | 2.7877 | 4.0083 | 0.5342 | 0.0506 | 10.1614 | 0.9920 | 0.1934 | 0.0054 |

39

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 0228751 A

**Non-patent literature cited in the description**

- **EL-BELTAGY M A et al.** Topographical mapping assisted evolutionary search for multilevel optimisation. *Proceedings of the 1999 Congress on Evolutionary Computation - CEC99 CAT. No. 99th 8406,* 06 July 1999, vol. 1, 660-665
- **C.M.E. HOLDEN ; R. DAVIES ; A. J. KEANE.** Optimisation Methodologies in Conceptual Design. *Proc. 9th AIAA/ISSMO Symp. On Multidisciplinary analysis and optimisation,* 2002, 1142-1152
- **H. P. SCHWEFEL.** Evolution and Optimum Seeking, Sixth Generation Computer Technology. John Wiley and Sons Inc, 1994
- Robust subroutines for non-linear optimisation. **K. MADSEN ; O. TINGLEFF.** Tech. Rep., Institute For Numerical Analysis. Technical University Of Denmark, February 1986
- **M.D. MCKAY ; R. J. BECKHAM ; W. J. CONOVER.** A comparison of three methods for selecting values of input variables in the analysis of output from a computer code. *Techometrics,* 1979, vol. 21 (2), 239-245
- **R.B. STATNIKOV ; J.B. MATUSOV.** MultiCriteria Optimisation and Engineering. Chapman & Hall Publishers
- **J. SACKS ; W. J. WELCH ; T. J. MITCHELL ; H. P. WYNN.** Design and analysis of computer experiments. *Statistical Science,* 1989, vol. 4 (4), 409-435
- **D. JONES ; M. SCHONLAU ; W. WELCH.** Efficient global optimisation of expensive black-box functions. *Journal of Global Optimisation,* 1998, vol. 13, 455-492
- **D. R. JONES.** A taxonomy of global optimisation methods based on response surfaces. *Journal of Global Optimisation,* 2001, vol. 21, 345-383
- **K. MORGAN ; J. PERAIRE ; J. PEIRO.** Unstructured grid methods for compressible flows. *Special Course on Unstructured Grid Methods for Advection Dominated Flows, AGARD Report 787,* March 1992

- **V. TORCZON ; C. M. SIEFERT ; M. W.** Model-assisted pattern search.'' In Proceedings: First International Workshop on Surrogate Modelling And Space Mapping for Engineering Optimisation. Technical University of Denmark, 16 November 2000
- **R. A. BATES ; R. FONTANA ; C. RANDAZZO ; E. VACCARINAO ; H.P. WYNN.** Empirical Modelling Of Diesel Engine Performance for Robust Engineering Design. *Statistics for Engine Optimisation,* 1998, 163-173
- Parallel coordinates: A tool for visualising multi-dimensional geometry. **INSELBERG ; B. DIMSDALE.** Proceedings, Visualisation 1990 IEEE. CS Press, 1990, 361-370
- **GOEL, A. ; BAKER, C. ; SHAFFER, C. ; GROSSMAN, B. ; HAFTKA, R. ; MASON, W. ; WATSON, L.** VizCraft: A Problem Solving Environment for Configuration Design of a High Speed Civil Transport. *Computing in Science and Engineering to appear,* 2000, http://citeseer.nj.nec.com/goe100vizcraft.html
- **T.KOHONEN.** Self -Organising Maps. Springer-Verlag, 2000
- The Application of Self-Organising Maps in Conceptual Design. **P.C. MATTHEWS.** Ph.D. thesis. Fitzwilliam College, June 2001
- Visualising multivariate functions, data and distributions. **T. MIHALALISIN ; J. TIMLIN ; J. SCHWEGLER.** Readings in Information Visualisation: Using Vision to Think. Morgan Kaufmann, 1999, 115-125
- **B. GROSSMAN ; R. T. HAFTKA ; W. H. MASON ; L. T. WATSON ; C. BAKER ; S. BALABANOV ; S. COX ; A. GIUNTA ; H. KIM ; D. KNILL.** Effective use of surrogate models in aircraft design. *Presentation at First International Workshop on Surrogate Modelling and Space Mapping for Engineering Optimisation - held in Lyngby,* 16 November 2000
- **N.A.C. CRESSIE.** Statistics for Spatial Data. Wiley-Interscience, 1993
- **M. SVENSEN.** GTM: The Generative Topographic Mapping. PhD Thesis. Aston University, 1998

- A Natural approach to Multilevel Optimisation in Engineering Design. **M. A. EI-BELTAGY.** PhD Thesis. University of Southampton, 2000

- **I. T. NABNEY.** Algorithms for Pattern Recognition. Springer, 2001
- **L. C. W. DIXON ; G. P. SZEGO.** The optimisation problem: An introduction. North Holland, 1978